# EUROPÄISCHE PATENTSCHRIFT

(11) **EP 1 678 028 B1**
(45) Veröffentlichungstag und Bekanntmachung des Hinweises auf die Patenterteilung: **30.12.2009**
(21) Anmeldenummer: 04790445.3
(22) Anmeldetag: 15.10.2004
(51) Int. Cl.: B62D 25/14, B62D 29/00

(54) **BAUTEIL FÜR EIN KRAFTFAHRZEUG**
COMPONENT FOR A MOTOR VEHICLE
COMPOSANT POUR VEHICULE AUTOMOBILE

(30) Priorität: 17.10.2003 DE 10349138
(43) Veröffentlichungstag der Anmeldung: 12.07.2006
(73) Patentinhaber: Behr GmbH & Co. KG, 70469 Stuttgart (DE)
(72) Erfinder: FEITH, Thomas, 70825 Korntal-Münchingen (DE); SCHMITZ, Jochen, 71229 Leonberg (DE); UNHOLZ, Volker, 70619 Stuttgart (DE); WOLF, Walter, 71570 Oppenweiler-Zell (DE)
(86) Internationale Anmeldenummer: PCT/EP2004/011591
(87) Internationale Veröffentlichungsnummer: WO 2005/037631

(56) Entgegenhaltungen:
- EP-A- 1 149 679
- DE-A1- 10 003 575
- US-A- 4 852 831
- US-A1- 2002 153 750
- US-B1- 6 199 940
- PATENT ABSTRACTS OF JAPAN Bd. 1997, Nr. 06, 30. Juni 1997 (1997-06-30) & JP 09 033003 A (BABCOCK HITACHI KK), 7. Februar 1997 (1997-02-07)

## Beschreibung

Die Erfindung betrifft ein Bauteil, insbesondere einen Querträger zum Anordnen zwischen den A-Säulen eines Kraftfahrzeugs, mit einem Grundkörper aus Metall, welcher im Wesentlichen rohrförmig oder in Form einer lang gestreckten Schale, d. h. eines offenen Profils, ausgebildet ist, und einem vom Profil des Grundkörpers zumindest teilweise umgebenen und mit diesem mechanisch verbundenen Kanal, insbesondere Lüftungskanal, aus Kunststoff. Ein derartiges Bauteil ist beispielsweise aus der DE 100 64 522 A1 bekannt.

In einem Kraftfahrzeug ist eine Gewichts- und/oder eine Bauraumeinsparung möglich, indem ein die A-Säulen verbindender Querträger gleichzeitig zur Luftführung genutzt wird. Durch eine Auskleidung des Querträgers mit Kunststoff kann sowohl die Stabilität des Querträgers erhöht als auch die Wahrscheinlichkeit einer Kondensation von in der klimatisierten, dem Fahrzeuginnenraum zuzuführenden Luft enthaltenen Feuchtigkeit gemindert werden. Typischerweise sind am Querträger Anbindungspunkte für weitere Komponenten, beispielsweise Lenksäule oder Airbag, angeordnet. Solche Anbindungspunkte sind in der Regel durch am Querträger angeschweißte Anschlussteile realisiert. Aufgrund der dünnwandigen, durch die stabilisierende Kunststoffauskleidung erst ermöglichte Bauweise des Querträgers ist jedoch die Herstellung von Schweißverbindungen am Querträger problematisch. Durch den Wärmeeintrag auf der Außenseite des Querträgers erfolgt sehr schnell eine Temperaturerhöhung auf dessen Innenseite, welche den einen Lüftungskanal bildenden Kunststoff schädigen kann. Darüber hinaus ist auch eine Entwicklung von Gas durch den erhitzten Kunststoff oder durch Abdampfen von Oberflächenbeschichtungen beispielsweise Zinkschichten möglich. Dieses Gas kann in das geschmolzene Metall der Schweißnaht eindringen und Poren bilden oder das flüssige Schweißgut aus der Schweißnaht blasen.

Aus der DE 100 03 575 A1 ist ein Bauteil für ein Kraftfahrzeug, insbesondere ein Querträger nach dem Oberbegriff des Anspruchs 1 bzw des Anspruchs 3 bekannt.

Der Erfindung liegt die Aufgabe zugrunde, ein Bauteil, insbesondere einen Querträger eines Kraftfahrzeugs, anzugeben, welches einen lang gestreckten Grundkörper aus Metall und einen mit diesem mechanisch verbundenen Kanal, insbesondere Lüftungskanal, aus Kunststoff umfasst und sich durch besonders rationelle Herstellungs- und Weiterverarbeitungsmöglichkeiten auszeichnet.

Diese Aufgabe wird erfindungsgemäß gelöst durch ein Bauteil mit den Merkmalen der Ansprüche 1 oder 3. Hierbei ist mit einem im Wesentlichen die Form eines Rohres oder eines offenen Profils aufweisenden metallischen Grundkörper, insbesondere Querträger zwischen den A-Säulen eines Kraftfahrzeugs, ein zumindest hauptsächlich aus Kunststoff gebildeter Kanal mechanisch verbunden. Der Grundkörper weist mindestens eine Fügestelle zur stoffschlüssigen Verbindung mit einem zur Befestigung eines weiteren Bauteils vorgesehenen Anschlussteil auf. Zumindest im Bereich der Fügestelle weist der Grundkörper und/oder der Kanal eine Form auf, durch welche ein Zwischenbereich zwischen der Fügestelle und dem eine Wandung des Kanals bildenden Kunststoff gegeben ist. Der Zwischenbereich verringert die Wärmeübertragung zwischen der Fügestelle und dem Kunststoff des Kanals. Die zumindest überwiegend aus Kunststoff gebildete Wandung des Kanals wird damit durch den Wärmeeintrag an der Fügestelle nicht nachteilig beeinflusst. Darüber hinaus fungiert, soweit entsprechende Temperaturen des Kunststoffs erreicht werden, der Zwischenbereich vorzugsweise als Entgasungsöffnung oder Entgasungsspalt und ermöglicht damit die Abführung von aus dem Kunststoff des Kanals gebildetem Gas oder aus Oberfiächenschichten verdampfendem Material während des Fügens, insbesondere Schweißens.

Der Kanal ist mittels des Spritzgussverfahrens mit dem Profil des Grundkörpers Kraft übertragend verbunden. Hierbei durchdringt der Kunststoff des Kanals während des Spritzgussprozesses bevorzugt Öffnungen im Grundkörper, so dass das auf diese Weise hergestellte Hybridbauteil durch den Kunststoff gebildete Verbindungselemente in der Art von Nietverbindungen aufweist. Zusätzliche Verbindungselemente zwischen dem Grundkörper, insbesondere Querträger, und dem Kanal, insbesondere Lüftungskanal, sind bei diesem Herstellungsverfahren nicht erforderlich. Das Bauteil ist bevorzugt geometrisch derart gestaltet, dass zur Herstellung des Kanals im Spritzgussverfahren lediglich ein einfach aufgebautes Spritzgusswerkzeug, idealerweise als so genanntes Auf-Zu-Werkzeug ohne oder mit einer geringen Anzahl zusätzlicher Schieber, benötigt wird. Alternativ kann der Kanal jedoch auch vorgefertigt sein und durch Klebeverbindungen, Clips-Verbindungen, Kragenfügen und/oder auf andere Weise mechanisch mit dem Bauteil verbunden werden.

Unabhängig vom Herstellungsverfahren, insbesondere IMA-Verfahren (In-Mould-Assembly) oder PMA-Vefahren (Post-Mould-Assembly) ist der Kanal bereits im oder am Bauteil angeordnet, bevor mit diesem das Anschlussteil, welches beispielsweise der Befestigung eines Airbags oder der Lagerung der Lenksäule dient, stoffschlüssig verbunden wird. Durch das Verbinden des Anschlussteils mit dem Grundkörper erst nach dem Einbringen des Kanals in den Grundkörper beziehungsweise Verbinden des Kanals mit dem Grundkörper werden andernfalls zu erwartende Toleranzprobleme vermieden. Des Weiteren ist hierdurch insbesondere eine rationelle Spritzgussfertigung unter gleichzeitiger Herstellung einer Festigkeit übertragenden Verbindung mit dem Grundkörper herstellbar, ohne aufwendige Schieber oder Abdichtungsvorrichtungen an den Anschlusspunkten zu verwenden.

Nach erfindungsgemäßer Ausgestaltung befindet sich die Fügestelle unmittelbar am Grundkörper. Auf das Einlegen verstärkender Zusatzteile wie Bleche in das Profil des Grundkörpers im Bereich der Fügestelle wird hierbei, soweit unter Berücksichtigung der Festigkeitsanforderungen möglich, verzichtet. Vorzugsweise weist der Grundkörper im zur stoffschlüssigen Befestigung des Anschlussteils vorgesehenen Bereich eine Prägestruktur, insbesondere Noppen- oder Rippenstruktur auf, welche sicherstellt, dass die Fügestelle vom Kunststoff des Kanals beabstandet ist. Damit ist allein durch die Form des Grundkörpers ein Abstand zwischen dem Anschlussteil und aus Kunststoff gebildeten Komponenten des Bauteils herstellbar, welcher die Wärmeübertragung zwischen der Fügestelle und dem Kunststoff verringert. Die Prägestruktur ist bevorzugt derart ausgebildet, dass die Wandung des im Übrigen aus Kunststoff gebildeten Kanals im an die Fügestelle anschließenden Zwischenbereich ausschließlich aus dem Material des Grundkörpers gebildet ist. Dies ist fertigungstechnisch auf einfache Weise dadurch realisierbar, dass die Noppen, Rippen oder sonstigen Prägestrukturen des Grundkörpers von dessen Außenseite her derart tief eingeprägt sind, dass der auf der Innenseite des Profils des Grundkörpers zur Herstellung des Kanals eingebrachte Kunststoff lediglich in Oberflächenbereichen des Grundkörpers außerhalb der Noppen, Rippen oder ähnlichen Vertiefungen - von der Außenseite des Profils aus betrachtet - eine Wandung des Kanals bildet. Im Bereich der genannten Vertiefungen dagegen ist die Wandung des Kanals durch das Material des Grundkörpers gebildet. Eine insgesamt glatte innere Oberfläche des Kanals ist herstellbar, indem die Summe aus der Prägetiefe der Prägestruktur des Grundkörpers und der Wandstärke des Grundkörpers zumindest annähernd der Wandstärke des Kanals im Bereich außerhalb der Vertiefungen entspricht. Insgesamt ist die innere Oberfläche des Kanals einschließlich der keinen Kunststoff aufweisenden Vertiefungen zum größten Teil aus Kunststoff gebildet, so dass die typischerweise bei Kanälen aus Metall auftretenden Kondensationsprobleme vermieden werden. Weiterhin ist durch die Prägestruktur des Grundkörpers ist in besonders vorteilhafter Weise zugleich die mechanische Stabilität des Bauteils erhöht.

Trotz der guten Wärmeleitung des metallischen Grundkörpers sind mit Kunststoff ausgekleidete oder vollständig aus Kunststoff gebildete Bereiche der Wandung des Kanals weit genug von der Fügestelle beabstandet, um ein Schweißen an dieser Stelle zu ermöglichen. Durch die zumindest eingeschränkte thermische Entkopplung der Fügestelle vom Kanal ist eine groß dimensionierte Gestaltung der Fügestelle mit entsprechend großflächiger Krafteinleitung vom Anschlussteil in den Grundkörper ermöglicht. Dies ist umso vorteilhafter, je dünnwandiger der Grundkörper ausgebildet ist. Das Bauteil ist damit bei großer Gestaltungsfreiheit bezüglich Anordnung und Form der Anschlussteile besonders Gewicht sparend ausgebildet. Eine besonders gleichmäßige, großflächige Krafteinleitung ist bevorzugt dadurch gegeben, dass das Anschlussteil nicht nur an einzelnen Punkten oder Linien, insbesondere Außenkonturen, mit dem Grundkörper stofflich verbunden, insbesondere verschweißt ist, sondern Fügestellen aufweist, welche sich über größere Flächen, etwa in der Form von Schweißnähten in der Art eines Wabenmusters oder einer Kreuzschraffur, erstrecken.

Der Grundkörper weist im der Fügestelle benachbarten Bereich vorzugsweise einen oder mehrere Durchbrüche, beispielsweise Bohrungen oder Stanzungen, als Entgasungsöffnungen auf, welche den Zwischenbereich oder einen Teil des Zwischenbereichs bilden. Derartige beispielsweise mit einem Laserstrahl vor dem Anschweißen des Anschlussteils erzeugte Entgasungsöffnungen sind bevorzugt kombiniert mit Verprägungen des Grundkörpers und/oder des hierauf befestigten Anschlussteils, welche Kanäle oder sonstige Hohlräume bilden, durch die beim Fügeprozess entstehende Gase entweichen können. Zusätzlich weist vorzugsweise auch das Anschlussteil mit den Entgasungsöffnungen des Grundkörpers zusammenwirkende Öffnungen und/oder Konturen auf.

Nach einer alternativen Weiterbildung ist die Fügestelle an einem zumindest an dieser Stelle vom Kanal, insbesondere Lüftungskanal, beabstandeten, nach außen gebogenen, das heißt vom Kanal wegweisenden, Ausbiegungsteil des Grundkörpers gebildet. Damit ist sowohl ein besonders großer Abstand der Fügestelle zum Kunststoff des Kanals als auch eine besonders großflächige Verbindung des Grundkörpers mit dem Anschlussteil herstellbar. Eine besonders rationelle Herstellung des Bauteils ist auch in dieser Ausgestaltung dadurch ermöglicht, dass die Fügestelle direkt am Grundkörper, ohne weitere Hilfselemente, angeordnet ist.

Abweichend von der vorstehend beschriebenen einteiligen Ausbildung des Grundkörpers mit an der Oberfläche des Kanals und/oder am Ausbiegungteil angeordneter Fügestelle kann mit dem Grundkörper auch ein gesondertes Teil, insbesondere ein so genanntes Einlegeteil, verbunden, beispielsweise verschweißt sein, welches die Fügestelle zur stoffschlüssigen Verbindung mit einem weiteren Bauteil aufweist. Hierbei weist das Einlegeteil bevorzugt einen innerhalb des Profils des Grundkörpers, das heißt auf der dem Kanal zugewandten Seite des Grundkörpers. angeordneten Teilbereich, sowie einen aus dem Kanal heraus ragenden Teilbereich auf. Der innere Teilbereich wird vorzugsweise gleichzeitig mit der Herstellung des Kanals im Spritzgussverfahren in diesen eingespritzt, wobei das Spritzgusswerkzeug im Vergleich zu einem Spritzgusswerkzeug, welches zur Herstellung eines Bauteils ohne zusätzliche Einlegeteile oder Adapter vorgesehen ist, nicht oder nur unwesentlich aufwendiger gestaltet ist, insbesondere keine zusätzlichen Schieber aufweist. In besonders vorteilhafter Weise ist durch das Einlegeteil eine zusätzliche Verstärkung des Bauteils gegeben. Die Wandstärke des Einlegeteils ist bevorzugt derart bemessen, dass die Wandung des Kanals in Bereichen, in denen das Einlegeteil am Grundkörper anliegt, unter Bildung einer insgesamt zumindest annähernd glatten Oberfläche frei von Kunststoff ist. Somit bildet das Einlegeteil zumindest einen Teil des Zwischenbereichs zwischen der Fügestelle, insbesondere Schweißwurzel, und der Kunststoffwandung des Kanals. Die Fügestelle befindet sich hierbei am außerhalb des Grundkörpers angeordneten Teil des Einlegeteils und/oder innerhalb eines Flächenbereichs des Grundkörpers, auf welchem der innere Teilbereich des Einlegeteils aufliegt. Insbesondere in der Ausbildung mit gesonderten Einlegeteilen hat das Bauteil den Vorteil, dass ohne oder nur mit geringer Abwandlung des als Basisteil dienenden Grundkörpers die Fertigung verschiedener Varianten möglich ist.

Nach sämtlichen vorstehend erläuterten Ausbildungen des Bauteils ist der Zwischenbereich zum Schutz des Kunststoffs des Kanals hauptsächlich durch die Gestaltung eines aus Metall gefertigten Teils hergestellt. Abweichend hiervon oder in einer Kombination mit diesen Ausgestaltungen ist nach weiteren Ausgestaltungen der mindestens eine Zwischenbereich, welcher vorzugsweise sowohl einen Isolationsraum als auch einen Entgasungsspalt bildet, durch die Oberflächenstruktur des Kunststoffs des Kanals hergestellt. Dies ist insbesondere in Fällen vorteilhaft, in welchen ein vorgefertigter Lüftungskanal durch Klebung und/oder mechanische Verbindungsvorrichtungen mit dem Grundkörper verbunden ist. Zwischenbereiche sind beispielsweise durch Rippen oder sonstige Erhebungen des vollständig aus Kunststoff gefertigten Kanals gebildet, welche an einer im Wesentlichen glatten inneren Oberfläche des Grundkörpers anliegen.

Unabhängig von der geometrischen Gestaltung des Grundkörpers sowie des Kanals ist das Anschlussteil bevorzugt mittels eines wärmearmen Fügeverfahrens, beispielsweise Laserschweißen oder Elektronenstrahlschweißen, mit dem Grundkörper verbunden. Auf diese Weise tritt auch bei einem dünnwandigen Grundkörper durch das Fügen höchstens ein geringer Verzug auf.

Der Vorteil der Erfindung liegt insbesondere darin, dass durch die Festigkeit übertragende Verbindung eines metallischen Grundkörpers eines Querträgers eines Kraftfahrzeugs mit einem eine Wandung zumindest überwiegend aus Kunststoff aufweisenden Lüftungskanal und die Ausbildung von der Minderung der Wärmeübertragung dienenden Zwischenbereichen zwischen unmittelbar am Grundkörper angeordneten Fügestellen und dem Kunststoff des im Spritzgussverfahren in den Grundkörper eingebrachten Lüftungskanals trotz dünnwandiger Bauweise des Grundkörpers eine rationelle, zuverlässige, mechanisch hoch belastbare Verbindung des Querträgers mit an den Fügestellen zu befestigenden Anschlussteilen ermöglicht ist.

Mehrere Ausführungsbeispiele der Erfindung werden nachfolgend anhand einer Zeichnung näher erläutert. Hierin zeigen:
- Fig. 1: das Profil eines Querträgers nach dem Stand der Technik,
- Fig. 2: den Querträger nach Fig. 1 mit eingespritztem Lüftungskanal nach dem Stand der Technik,
- Fig. 3a, 3b: ein Bauteil mit einem Querträger als Grundkörper mit eingespritztem Lüftungskanal und stoffschlüssig verbundenem Anschlussteil nach der Erfindung,
- Fig. 4 bis 7: weitere Ausführungsbeispiele von Bauteilen jeweils in einer Ansicht analog Fig. 3,

- Fig. 8a, 8b: ein Ausführungsbeispiel eines Bauteils mit einer zur stoffschlüssigen Verbindung mit einem Anschlussteil vorgesehenen Fügestelle an einem Ausbiegungsteil eines Grundkörpers,
- Fig. 9, 10: weitere Beispiele von Bauteilen jeweils in einer Ansicht analog Fig. 8a,
- Fig. 11: ein Beispiel eines Bauteils mit zwischen der äußeren Oberfläche eines Lüftungskanals und einem Grundkörper gebildeten isolierenden Zwischenbereichen,
- Fig. 12: ein Ausführungsbeispiel eines Bauteils mit mehreren Lüftungskanälen,
- Fig. 13a, 13b: in perspektivischer Ansicht sowie in ausschnittsweisem Querschnitt ein weiteres Beispiel eines Bauteils mit an einem Grundkörper angeschweißtem Anschlussteil,
- Fig. 14: in teilweise geschnittener, perspektivischer Ansicht im Detail die Befestigung eines Anschlussteils an einem Bauteil,
- Fig. 15a, 15b: in perspektivischer Ansicht sowie im Querschnitt im Detail ein weiteres Ausführungsbeispiel einer Befestigung eines Anschlussteils an einem Bauteil,
- Fig. 16a bis d: in schematischer Ansicht jeweils die Struktur eines Anschlussteils in Draufsicht bzw. im Querschnitt,
- Fig. 17: im Querschnitt ein weiteres Beispiel eines MetallKunststoff-Verbundbauteils, hergestellt im PMA-Verfahren,
- Fig. 18a, 18b: jeweils in perspektivischer Darstellung ein Beispiel eines Grundkörpers mit an diesem befestigtem Anschlussteil,
- Fig. 19a, 19b: in schematischer Ansicht jeweils ein Detail des Grundkörpers bzw. des Anschlussteils nach Fig. 18b, und
- Fig. 20a, 20b: in perspektivischer Ansicht sowie im Querschnitt einen Querträgers mit eingespritztem Lüftungskanal und zusätzlichen Einlegeteilen.

Einander entsprechende oder gleich wirkende Teile sind in allen Figuren mit den gleichen Bezugszeichen versehen.

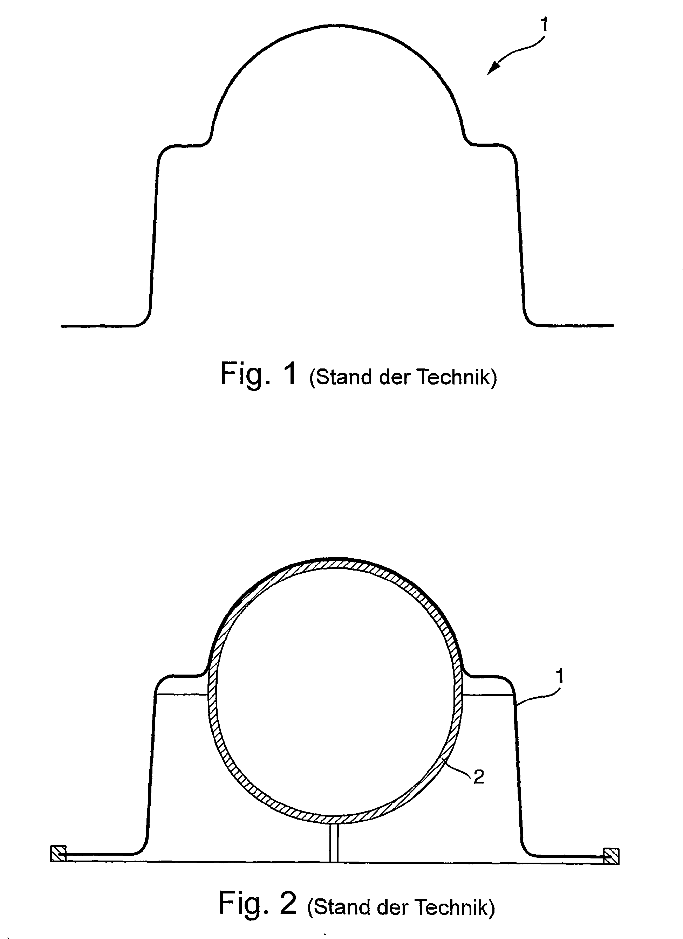

Die Fig. 1 zeigt im Querschnitt einen hinsichtlich dessen Funktion prinzipiell bekannten Querträger 1 aus Metall, welcher den Grundkörper eines nachstehend noch näher erläuterten Bauteils nach der Erfindung bildet. Der Querträger 1, auch als Instrumententräger bezeichnet, ist als tragendes Teil der Karosseriestruktur zwischen den A-Säulen eines Kraftfahrzeugs angeordnet und dient unter anderem dem mechanischen Anschluss weiterer Bauteile, beispielsweise eines Airbag-Gehäuses.

Ebenfalls grundsätzlich bekannt, beispielsweise aus der DE 100 64 522 A1, ist die Anordnung nach Fig. 2, welche den Querträger 1 mit im Spritzgussverfahren angeformtem Kanal oder Lüftungskanal 2 aus Kunststoff mit kreisrundem Querschnitt zeigt. Der die Stabilität des Querträger 1 zumindest geringfügig erhöhende Lüftungskanal 2 erstreckt sich längs des Querträgers 1 und dient damit der Verteilung von Zuluft in Querrichtung des Fahrzeugs.

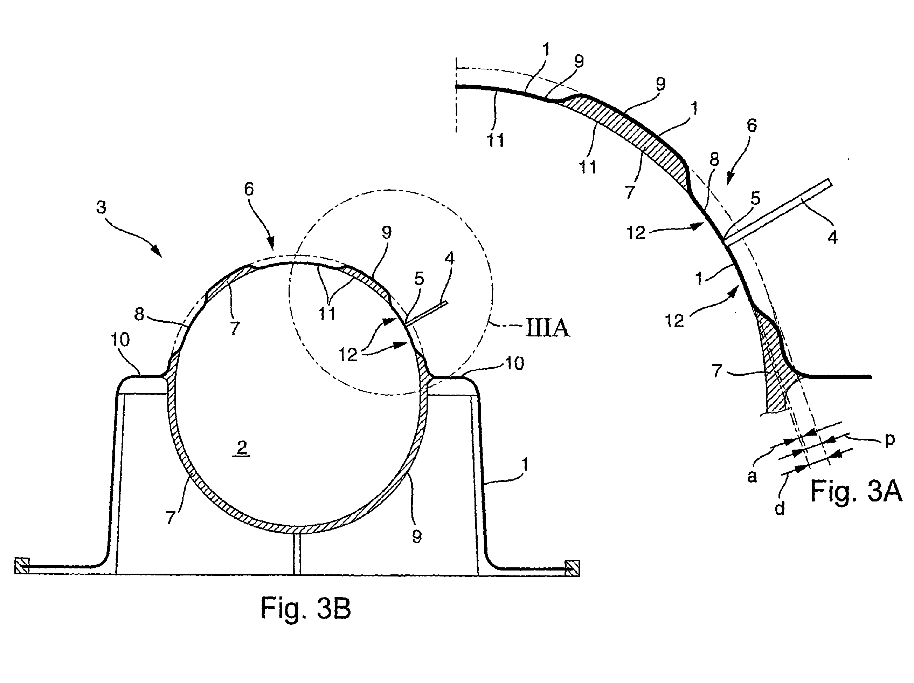

Die Fig. 3a und 3b zeigt in einer Anordnung analog Fig. 1 und 2 den prinzipiellen Aufbau eines Bauteils 3 nach der Erfindung. Zusätzlich zum Grundkörper oder Querträger 1 und zum mit diesem mittels des Kunststoffspritzgussverfahrens verbundenen Lüftungskanal 2 ist hierbei ein lediglich symbolisiert dargestelltes Anschlussteil 4 vorgesehen. Das Anschlussteil 4 ist wie der Grundkörper 1 aus Metall gefertigt und an diesem mit einer Schweißnaht 5, allgemein als Fügestelle bezeichnet, befestigt. Im Unterschied zum Ausführungsbeispiel nach Fig. 2 weist der Grundkörper 1 im Ausführungsbeispiel nach Fig. 3 eine Prägestruktur 6 in Form einer Noppenstruktur auf, welche ihm eine wesentlich verbesserte mechanische Stabilität verleiht und in den Kunststoff 7 des Lüftungskanals 2 eindringt. Hierbei ragen die einzelnen Noppen 8 der Prägestruktur 6 in Richtung des Innenraums des Kanals 2.

Während die Außenseite 9 des Lüftungskanals 2 in dessen in der Darstellung oberem Bereich, das heißt oberhalb zweier Stege 10, welche als Teile des Grundkörpers 1 in Radialrichtung an den kreisrunden Lüftungskanal 2 anschließen, ausschließlich aus dem Material des Grundkörpers 1 gebildet ist, weist die Innenseite 11 Bereiche aus Metall, nämlich die Noppen 8, und ansonsten eine Oberfläche aus Kunststoff 7 auf. Die annähernd über den gesamten Umfang konstante Wandstärke des Lüftungskanals 2 ist mit d, die Wandstärke des Grundkörpers 1 mit a, und die Prägetiefe der Prägestruktur 6 mit p bezeichnet. Wie insbesondere aus der Detailansicht nach Fig. 3a ersichtlich ist, entspricht die Summe aus der Prägetiefe p und der Wandstärke a des Grundkörpers 1 der Wandstärke d des Lüftungskanals 2. Die aus Kunststoff 7 gebildeten inneren Oberflächenbereiche des Lüftungskanals 2, welche sich insgesamt über den größten Teil der inneren Oberfläche des Lüftungskanals 2 erstrecken, schließen somit unter Bildung einer glatten Oberfläche an die Noppen 8 aus Metall an. Die Schweißnaht 5 befindet sich im Bereich einer Noppe 8, wodurch ein die Fügestelle 5 vom Kunststoff 7 des Lüftungskanals 2 trennender Zwischenbereich 12 gebildet ist. Dieser Zwischenbereich 12 ermöglicht eine Anschweißung des Anschlussteils 4 am Grundkörper 1 nach der Formung des Lüftungskanals 2 im Grundkörper 1 ohne Gefahr der Beschädigung des Kunststoffs 7. Umgekehrt ist auch die Qualität der Schweißnaht 5 durch den Kunststoff 7 nicht beeinträchtigt.

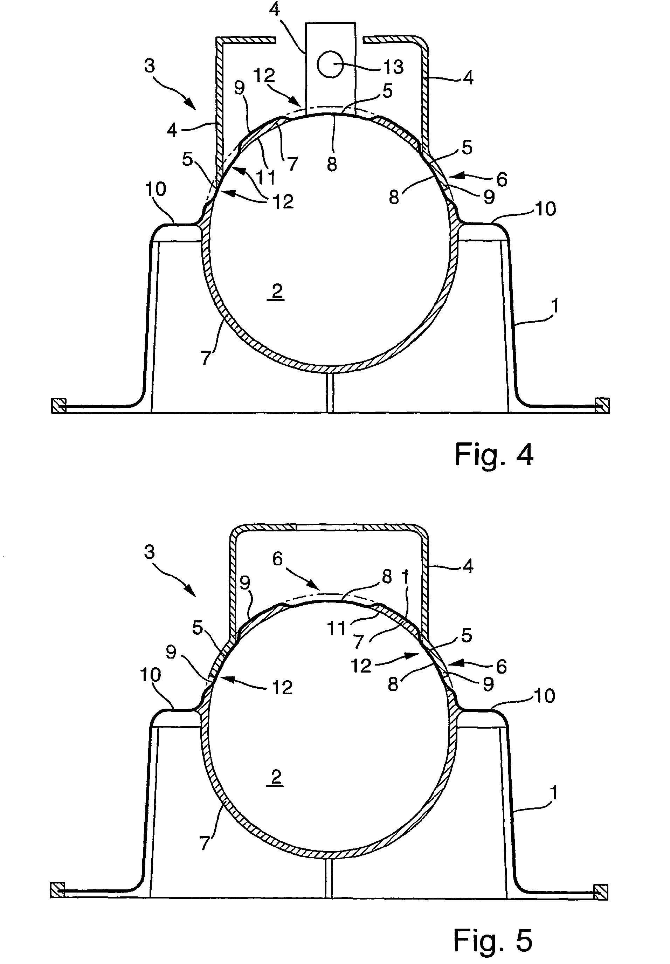

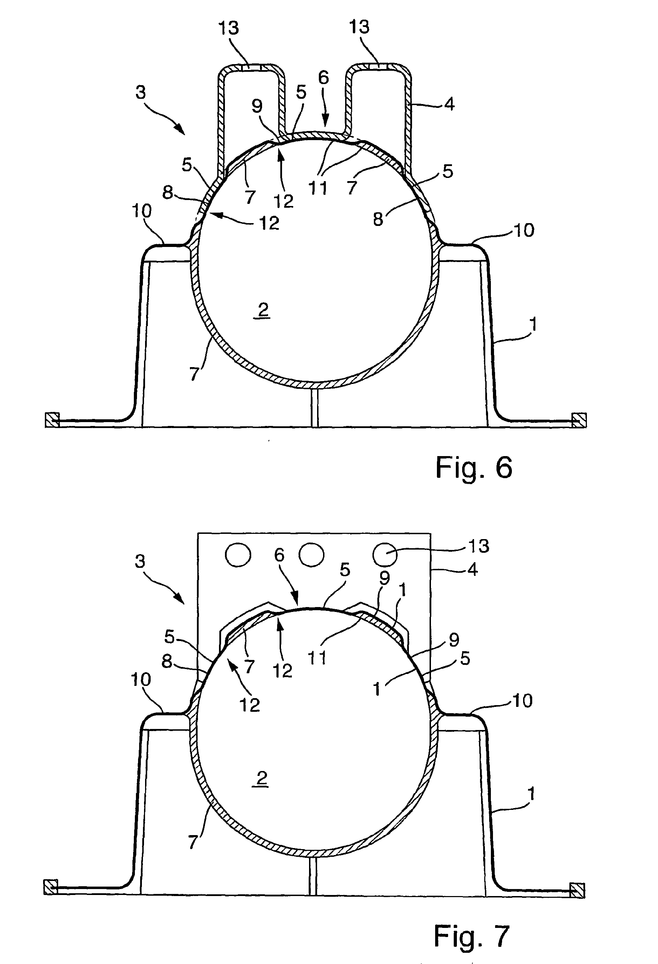

Die Fig. 4 bis 7 zeigen in konkreter Ausgestaltung des Prinzipbeispiels nach Fig. 3a und 3b jeweils ein Ausführungsbeispiel eines Bauteils 3 mit unterschiedlicher Gestaltung mindestens eines Anschlussteils 4. In jedem Fall befinden sich Fügestellen 5 ausschließlich in Bereichen des Grundkörpers 1, welche beim Spritzgussprozess nicht mit Kunststoff 7 umspritzt wurden, so dass ein zumindest gering dimensionierter Zwischenbereich 12 gebildet ist. Die aus gestanzten und/oder gebogenen Blechen, die im Wesentlichen entweder längs oder quer zur Erstreckung des Grundkörpers 1 ausgerichtet sind, gebildeten Anschlussteile 4 sind im Bereich einer oder mehrerer Noppen 8 an den Grundkörper 1 angeschweißt. Zur mechanischen Verbindung der Anschlussteile 4 mit nicht dargestellten weiteren Bauteilen sind Bohrungen 13 vorgesehen.

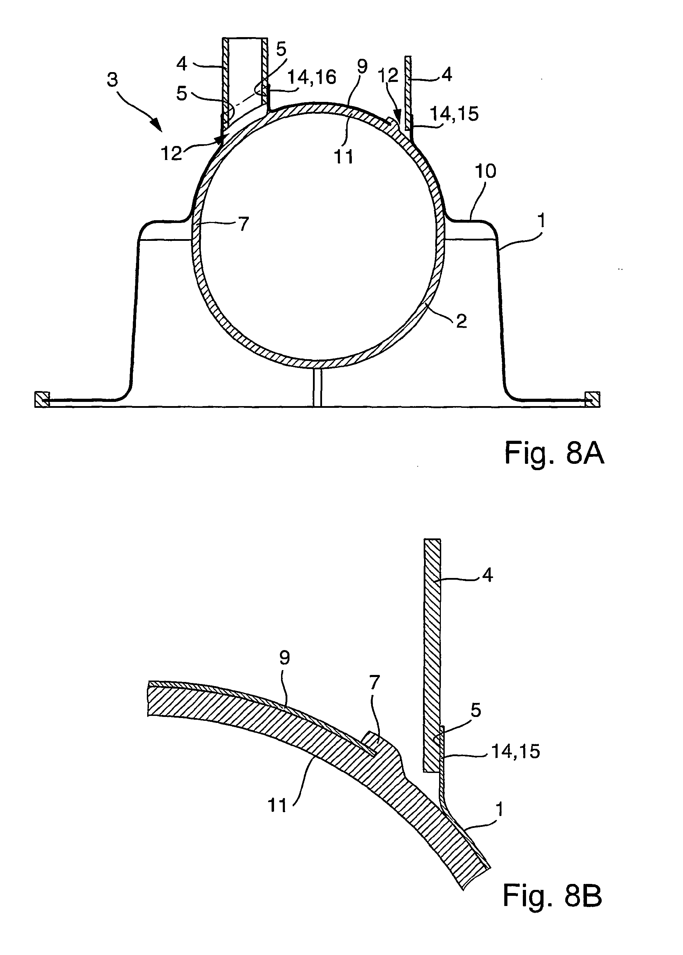

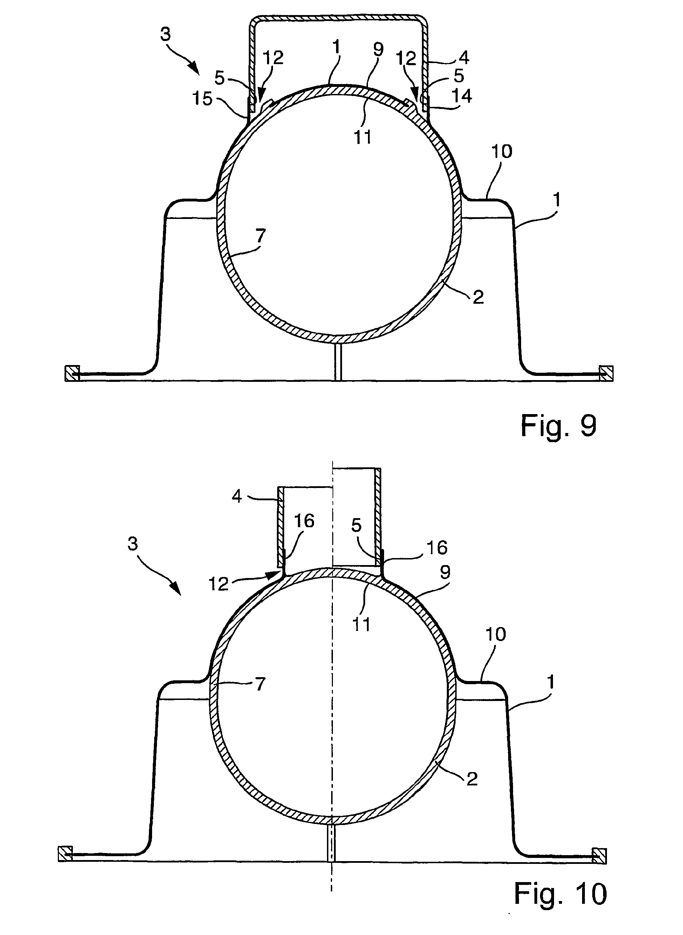

Eine alternative Anordnung der Fügestellen 5 zeigen die Ausführungsbeispiele nach den Fig. 8a und 8b bis 10. Hierbei weist der Grundkörper 1 jeweils mindestens ein Ausbiegungsteil 14 auf, welches entweder als Schenkel 15 aus dem Grundkörper 1 ausgebogen ist oder als länglicher oder runder Durchzug 16 vorzugsweise ebenso einstückig mit dem Grundkörper 1 ausgebildet ist. Ein Anschlussteil 4 kann, wie aus Fig. 10 hervorgeht, innenseitig oder außenseitig an einem Durchzug 11 befestigt sein. Die Ausbiegungsteile 14 werden vor der Einbringung des Lüftungskanals 2 in den Grundkörper 1 geformt. Insbesondere aus der Detailansicht nach Fig. 8b geht hervor, dass der Kunststoff 7 den Grundkörper 1 im an einen durch die Formung des Ausbiegungsteils 14 erzeugten Durchbruch 17 angrenzenden Bereich auch auf der Außenseite 9 umschließt. Hierdurch ist die Kraft übertragende Verbindung zwischen dem Lüftungskanal 2 und dem Grundkörper 1 verbessert.

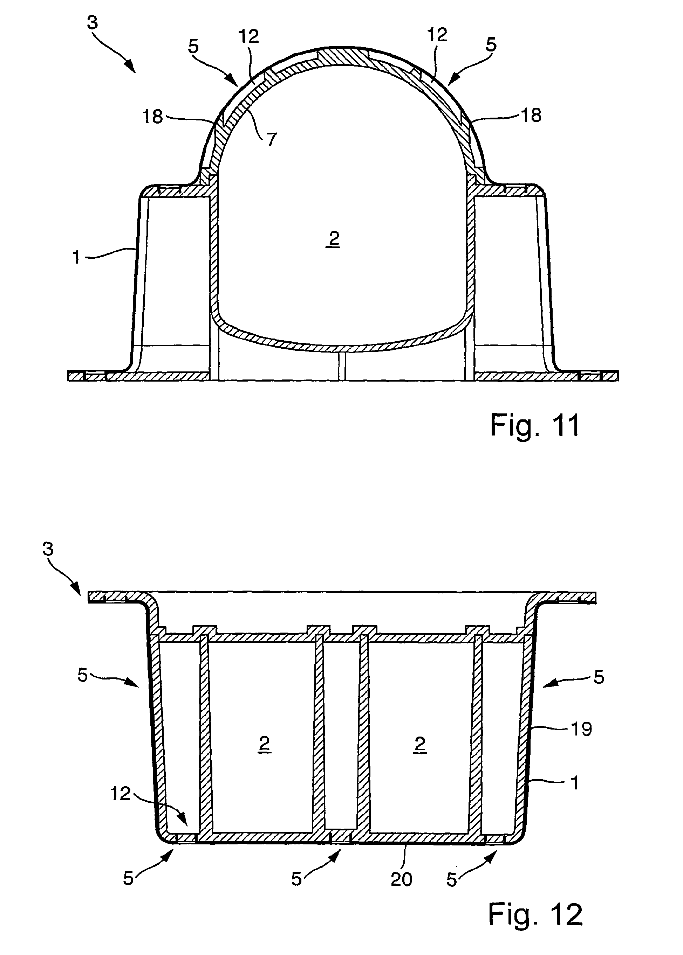

In einem Beispiel nach Fig. 11 weist der Grundkörper 1 ein Profil auf, welches dem Querträger 1 nach den vorgenannten Ausführungsbeispielen entspricht. Im Unterschied hierzu ist der Lüftungskanal 2 jedoch nicht in den Grundkörper 1 eingespritzt, sondern vorgefertigt und anschließend durch Kleben, Clipsen oder Kragenfügen mit dem Grundkörper 1 verbunden. Der Lüftungskanal 2 weist in dessen dem Grundkörper 1 zugewandten Bereich außenseitig eine unebene Oberflächenstruktur mit Rippen 18 auf, welche zwischen dem Lüftungskanal 2 und dem Grundkörper 1 mehrere Zwischenbereiche 12 als Isolationsräume bilden. Anschlussteile 4 sind ausschließlich im Bereich dieser Isolationsräume 12 am Grundkörper 1 befestigt. Soweit beim Fügen des Anschlussteils 4 an der Fügestelle 5 eine Erwärmung auftritt, welche zu einer Gasentwicklung durch den Kunststoff 7 führt, entweicht das Gas durch die als Kanäle ausgebildeten Zwischenbereiche 12. In nicht näher dargestellter Weise sind zur weiteren Ableitung des Gases soweit erforderlich Öffnungen im Grundkörper 1 vorgesehen.

Die Fig. 12 zeigt ein Beispiel eines Bauteils 3 mit im Wesentlichen rechteckigem Querschnitt, innerhalb dessen zwei rechteckige Lüftungskanäle 2 verlaufen. Beide Lüftungskanäle 2 sind von Seitenwänden 19 des Grundkörpers 1 beabstandet und schließen an eine Basisfläche 20 des Grundkörpers 1 an. Fügestellen 5 sind ausschließlich in Bereichen des Grundkörpers 1 vorgesehen, in welchen sich innenseitig an das den Grundkörper 1 bildende Blech keine Wandung eines Lüftungskanals 2 anschließt. Durch das Aufschweißen eines hier nicht dargestellten Anschlussteils 4 auf den Grundkörper 1 wird somit der Kunststoff 7 höchstens in Bereichen außerhalb der Lüftungskanäle 2 lokal angeschmolzen. Zur Vermeidung einer Beeinträchtigung der Schweißnähte 5 weist der Kunststoff 7 in den angrenzenden Bereichen in vorteilhafter Weise nicht dargestellte Durchbrüche, beispielsweise Stanzungen, auf. Derartige Stanzungen, durch die aus dem Kunststoff 7 gebildetes Gas entweichen kann, können in entsprechender Weise auch bei den übrigen Ausführungsbeispielen vorgesehen sein.

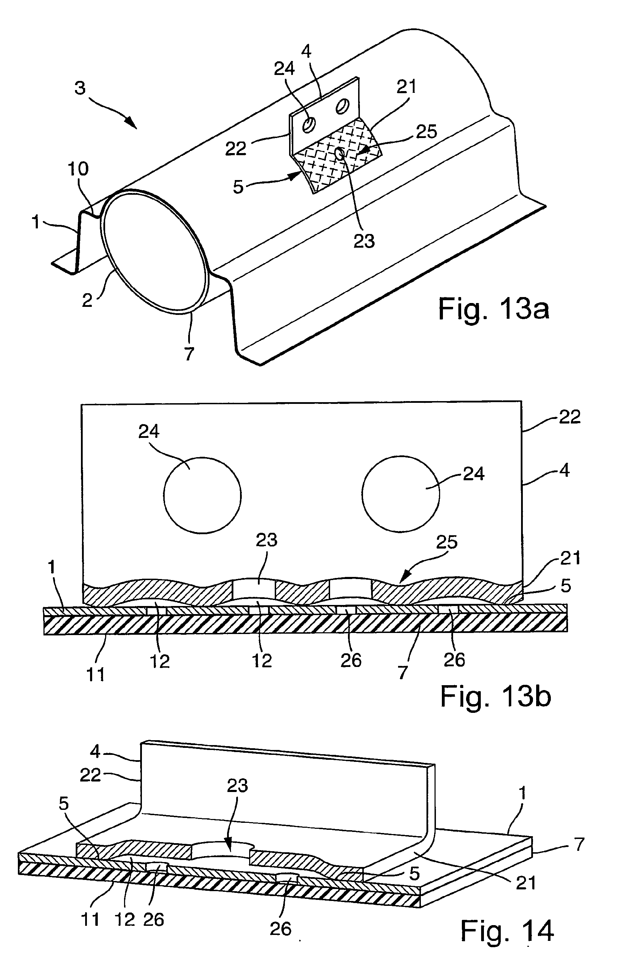

Die Fig. 13a und 13b zeigen in perspektivischer Gesamtansicht sowie in schematischer, geschnittener Detailansicht die Befestigung eines Anschlussteils 4 mit geprägter Struktur auf der glatten Oberfläche eines Grundkörpers 1. Der Grundkörper 1 einschließlich des einen kreisrunden Querschnitt aufweisenden Lüftungskanals 2 ist als Hybridbauteil im Spritzgussverfahren hergestellt. Das Anschlussteil 4 weist im Wesentlichen die Form eines abgeknickten Blechstreifens mit einem ersten, auf dem Grundkörper 1 aufliegenden Auflageschenkel 21 und einem zweiten, zur Befestigung eines nicht dargestellten Bauteils, beispielsweise eines Airbags, vorgesehenen Befestigungsschenkel 22 auf. Der Auflageschenkel 21 weist eine zentrale Bohrung 23, der Befestigungsschenkel 22 zwei Bohrungen 24 auf. Der entsprechend der Krümmung des Querträgers 1 gekrümmte Auflageschenkel 21 weist eine Prägestruktur 25 auf, welche in der Draufsicht ein kreuzförmiges Muster und im Querschnitt eine Wellenform zeigt. Die auf dem Querträger 1 aufliegenden Bereiche der Prägestruktur 25 bilden die Fügestelle 5. Zwischen den vom Grundkörper 1 beabstandeten Bereichen der Prägestruktur 25 und der Oberfläche des Grundkörpers 1 ist der Zwischenbereich 12 gebildet. Der Grundkörper 1 weist im dem Auflageschenkel 21 gegenüberliegenden Bereich eine Anzahl Öffnungen 26 auf, welche dazu dienen, beim Schweißen als Fügeverfahren vom Kunststoff 7 oder einer Beschichtung, beispielsweise Zink, abgesondertes Gas abzuleiten. Das entstehende Gas wird sowohl an den Seitenkanten des Auflageschenkels 21 als auch durch die Bohrung 23 weiter von der Fügestelle 5 abgeführt. Die insgesamt annähernd flächige Verbindung des Auflageschenkels 21 mit dem Grundkörper 1 ermöglicht zusammen mit dem großflächig kraftschlüssig mit dem Grundkörper 1 verbundenen Kanal 2 eine leichte und dennoch stabile Bauweise des Bauteils 3.

In Fig.14 ist ein Detail eines Beispiels einer Befestigung eines Anschlussteils 4 an einem Grundkörper 1 dargestellt. In diesem Fall ist das Anschlussteil 4 lediglich in den Randbereichen mit dem Grundkörper 1 verschweißt, wobei im mittleren Bereich des Auflageschenkels 21 ein flacher Zwischenbereich 12 gebildet ist, welcher über eine Bohrung 23 mit dem Außenraum verbunden ist. Die Öffnungen 26 im Grundkörpers 1 sind beispielsweise vor dem Aufschweißen des Anschlussteils 4 durch Laserbearbeitung erzeugt. In der dargestellten oder in ähnlicher Art kann in fertigungstechnisch flexibler Weise eine Vielzahl an Anschlussteilen 4 an beliebigen Stellen mit dem Grundkörper 1 verbunden sein.

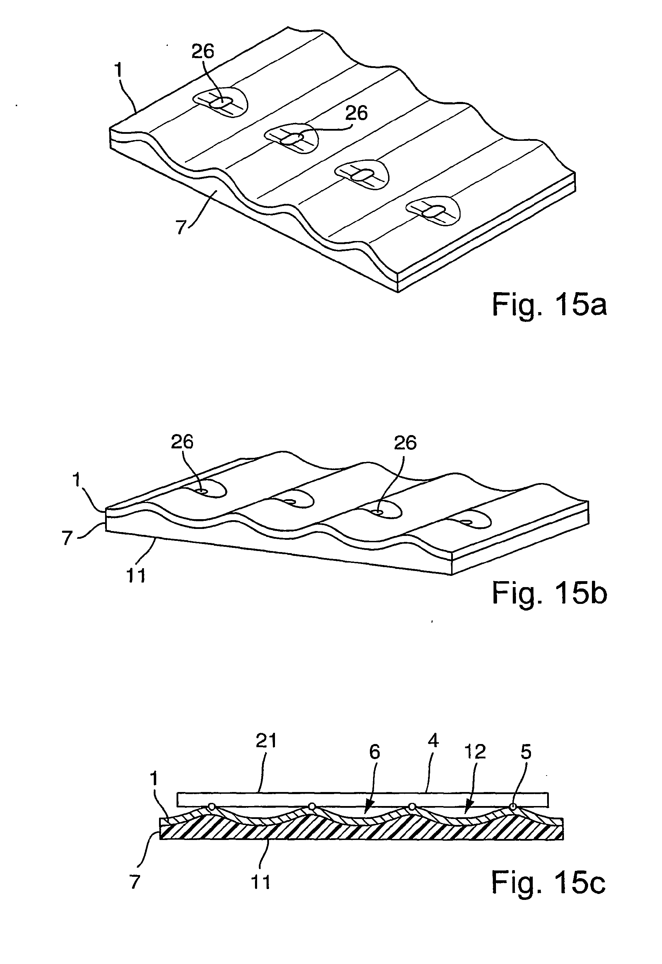

Abweichend von den Ausführungsbeispielen nach den Fig. 13a, 13b und 14 zeigen die Fig. 15a und 15b ein Ausführungsbeispiel, in welchem die Oberfläche des Grundkörpers 1 gewellt ist, während der mit dieser verschweißte Auflageschenkel 21 eben ist. Die Öffnungen 26 im Grundkörper 1 sind in diesem Fall als Schlitze ausgebildet.

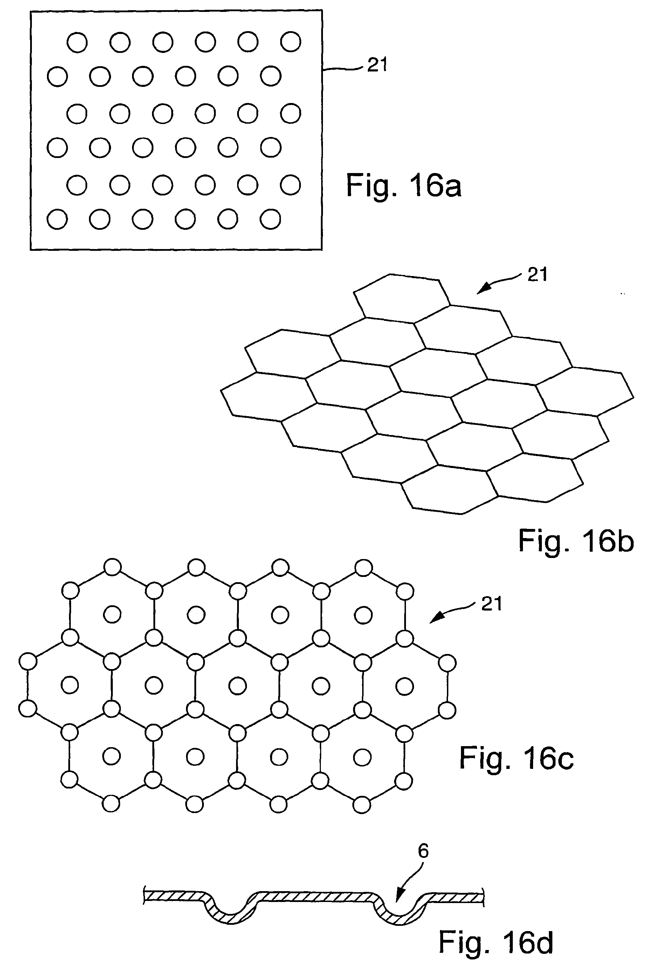

Die Fig. 16a bis 16c zeigen schematisch unterschiedliche Ausbildungen des Auflageschenkels 21, nämlich ein Lochmuster (Fig. 16a), ein Wabenmuster (Fig. 16b) sowie ein kombiniertes Waben/Noppenmuster (Fig. 16c). Der schematische Querschnitt nach Fig. 16d bezieht sich auf jedes der Ausführungsbeispiele nach den Fig. 16a bis 16c. Grundsätzlich sind unterschiedlichste Oberflächenstrukturen des Auflageschenkels 21 mit Vertiefungen und/oder Erhöhungen verwendbar. Vorzugsweise weist der Grundkörper 1 im Bereich der Fügestellen 5 eine hierauf abgestimmte Oberflächenstruktur auf. In diesem Sinne beziehen sich die in den Fig. 16a bis 16c dargestellten Strukturen auch auf die Oberfläche des Grundkörpers 1.

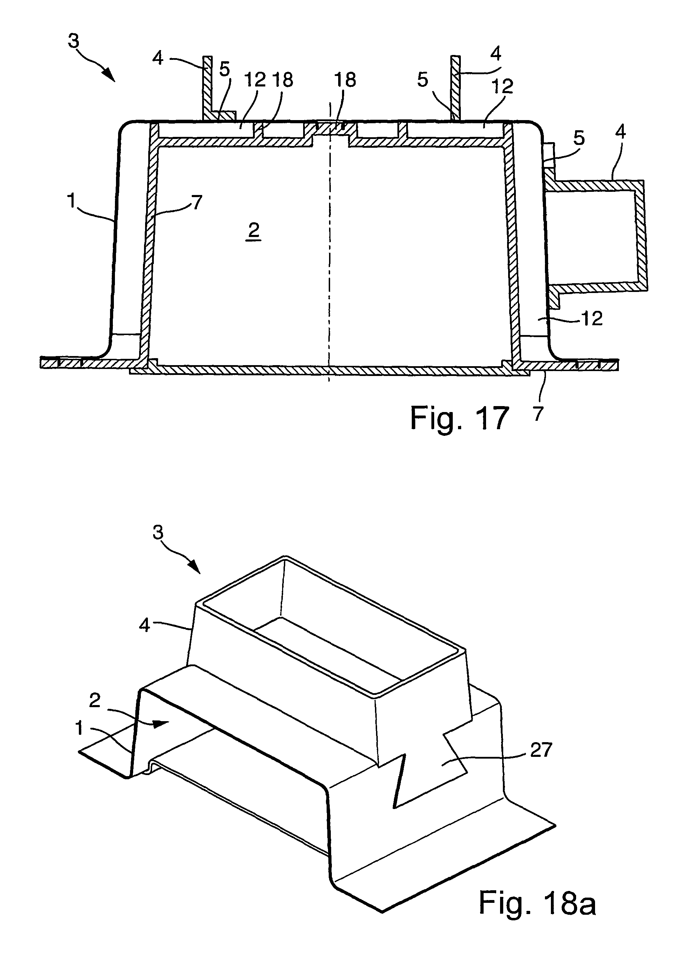

Die Fig. 17 zeigt in schematischem Querschnitt ein Beispiel eines Bauteils 3 mit einem metallischen Grundkörper 1 mit im Wesentlichen trapezförmigem Querschnitt, sowie einem mit diesem mechanisch verbundenen Lüftungskanal 2. Fügestellen 5 zum Anschweißen von Anschlussteilen 4 sind ausschließlich an solchen Stellen des Grundkörpers 1 vorgesehen, an denen sich auf der Innenseite des Profils des Grundkörpers 1 keine Wandung des Lüftungskanals 2 befindet. Das Bauteil 3 ist beispielsweise im PMA-Verfahren hergestellt.

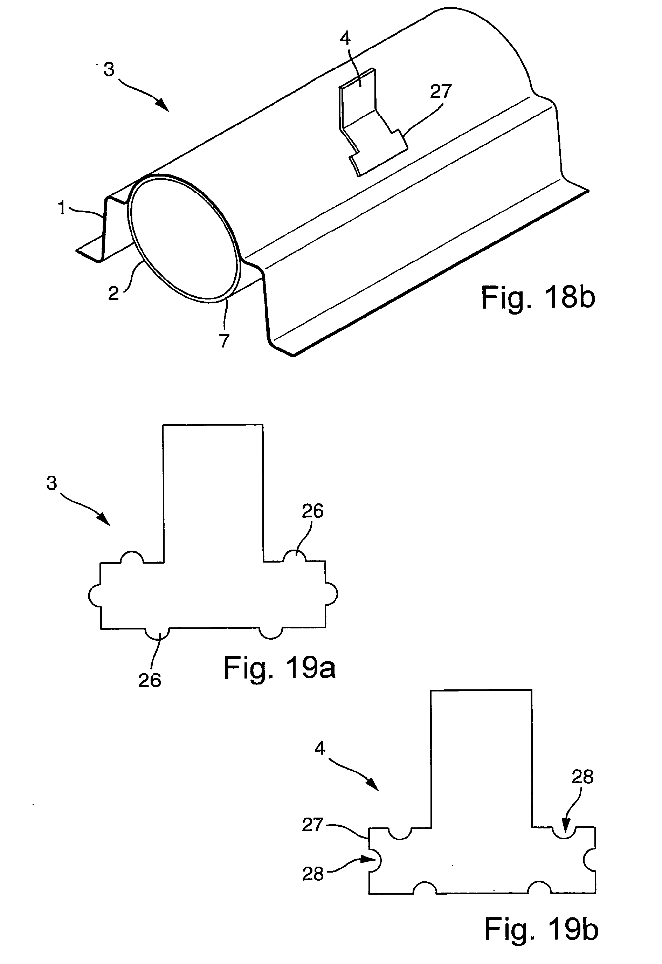

Die Beispiele nach den Fig. 18a und 18b zeigen prinzipielle Möglichkeiten der Befestigung eines voluminösen Anschlussteils 4 am Grundkörper 1. Hierbei weist das Anschlussteil 4 einen auf dem Grundkörper 1 aufliegenden, mit diesem zu verschweißenden Befestigungsarm 27. auf. Bereits vor dem Verschweißen ist das Anschlussteil 4 mittels des Befestigungsarms 27 formschlüssig auf dem Grundkörper 1 gehalten.

Die Fig. 19a und 19b zeigen schematisiert Oberflächenstrukturen des Grundkörpers 1 (Fig. 19a) sowie des Anschlussteils 4 (Fig. 19b) im Bereich des Befestigungsarms 27 nach Fig. 18b. Hierbei sind zur Ermöglichung einer Gasabführung aus dem Kunststoff 7 im Grundkörper 1 Öffnungen 26 und im Befestigungsarm 27 Kerben 28 vorgesehen.

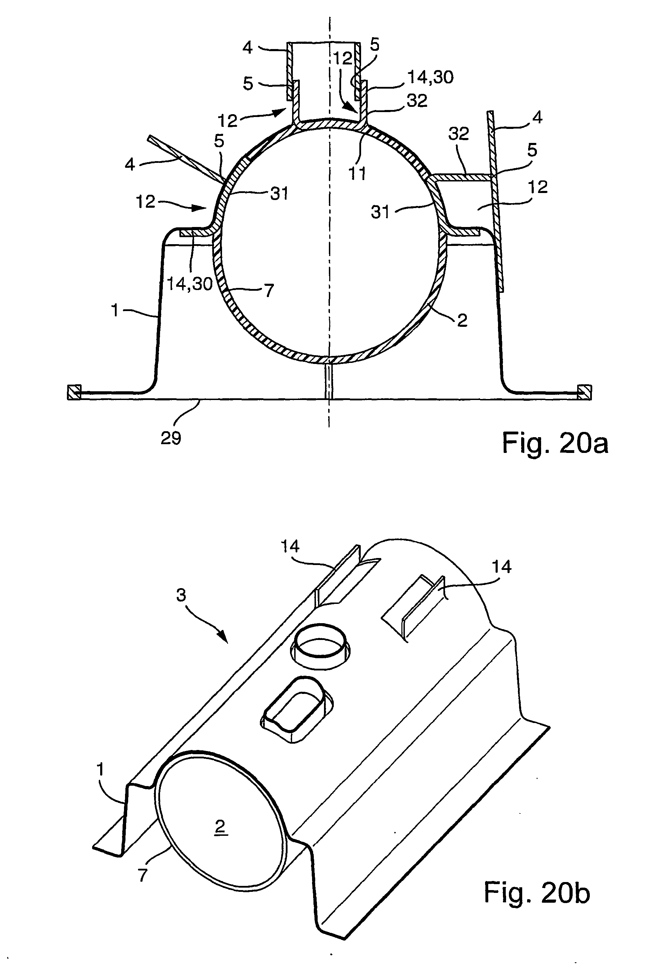

Die Fig. 20a und 20b zeigen in schematisierten Querschnitt sowie in perspektivischer Ansicht ein Beispiel eines Bauteils 3, welches zusätzlich zum Grundkörper 1 und Lüftungskanal 2 eine Verrippung 29 aus Kunststoff 7 aufweist, die zusammen mit dem Lüftungskanal 2 im Spritzgussverfahren hergestellt ist. Die Ausbiegungsteile 14 sind in diesem Fall nicht aus dem Grundkörper 1 herausgeformt, sondern als Einlegeteile 30 ausgebildet, welche jeweils einen innen am Grundkörper 1 anliegenden in diesem Ausführungsbeispiel bogenförmigen Innenabschnitt 31 aufweisen, dessen Wandstärke zumindest annähernd der Wandstärke d des Lüftungskanals 2 abzüglich der Wandstärke a des Grundkörpers 1 entspricht. Die innere Oberfläche des Lüftungskanals 2 ist damit vergleichbar dem Ausführungsbeispiel nach den Fig. 3a und 3b teilweise aus Kunststoff 7 und teilweise aus Metall gebildet.

Eine erste Fügestelle 5 befindet, in Fig. 20a links, direkt an der Außenseite des Grundkörpers 1. Dadurch, dass der Kunststoff 7 auf der Innenseite des Querträgers 1 durch den Innenabschnitt 31 des Einlegeteils 30 verdrängt ist, ergibt sich auch hier ein Zwischenbereich 12 zwischen der Fügestelle 5 und dem die Wandung des Lüftungskanals 2 bildenden Kunststoff 7. Der Kern eines beim Spritzgussverfahren verwendeten Werkzeugs weist einen Außendurchmesseer auf, der dem Innendurchmesser des Lüftungskanals 2 entspricht. Während des Spritzgussvorgangs sind damit die Einlegeteile 30 fest im Grundkörper 1 gehalten. Von den Innenabschnitten 31 aus erstrecken sich im Fall der in der Darstellung mittleren und rechten Einlegeteile 30 den Grundkörper 1 durchdringende Haltearme 32 im Wesentlichen radial nach außen, an welchen die Anschlussteile 4 als Halter oder Anbindungen für weitere Bauteile angeschweißt sind.

### Bezugszeichenliste

- 1: Grundkörper, Querträger
- 2: Lüftungskanal
- 3: Bauteil
- 4: Anschlussteil
- 5: Fügestelle, Schweißnaht
- 6: Prägestruktur
- 7: Kunststoff
- 8: Noppe
- 9: Außenseite
- 10: Steg
- 11: Innenseite
- 12: Zwischenbereich
- 13: Bohrung
- 14: Ausbiegungsteil
- 15: Schenkel
- 16: Durchzug
- 17: Durchbruch
- 18: Rippe
- 19: Seitenwand
- 20: Basisfläche
- 21: Auflageschenkel
- 22: Befestigungsschenkel
- 23: Bohrung
- 24: Bohrung
- 25: Prägestruktur
- 26: Öffnung
- 27: Befestigungsarm
- 28: Kerbe
- 29: Verrippung
- 30: Einlegeteil
- 31: Innenabschnitt
- 32: Haltearm

- a: Wandstärke des Grundkörpers
- b: Wandstärke des Kanals
- c: Prägetiefe

## Patentansprüche

1. Bauteil, insbesondere Querträger zum Anordnen zwischen A-Säulen eines Kraftfahrzeugs, mit einem im Wesentlichen eine Rohrform oder eine sonstige lang gestreckte Form aufweisenden metallischen Grundkörper (1), mit welchem zumindest teilweise innerhalb des Profils des Grundkörpers (1) ein Kanal (2), insbesondere Lüftungskanal, aus Kunststoff (7) verbunden ist, und mit einem mit dem Grundkörper (1) oder einem starr mit diesem verbundenen Teil mechanisch verbundenen Anschlussteil (4) zur Befestigung eines weiteren Bauteils, wobei
das Anschlussteil (4) unter Bildung eines Zwischenbereichs (12) zur Minderung der Wärmeübertragung zwischen dem Anschlussteil (4) und dem Kunststoff (7) des Kanals (2) und/oder zur Ableitung eines beim Fügen entstehenden Gases stoffschlüssig an einer Fügestelle (5) mit dem Grundkörper (1) verbunden ist,
**dadurch gekennzeichnet,**
**dass** die Fügestelle (5) unmittelbar am Grundkörper (1) angeordnet ist und der Kanal (2) mittels Kunststoffspritzguss festigkeitsübertragend mit dem Grundkörper (1) verbunden ist, wobei der Grundkörper (1) im zur Befestigung des Anschlussteils (4) vorgesehenen Bereich eine Prägestruktur (6) aufweist, welche derart ausgebildet ist, dass die Wandung des im Übrigen aus Kunststoff (7) gebildeten Kanals (2) im an die Fügestelle (5) anschließenden Zwischenbereich (12) aus dem Material des Grundkörpers (1) gebildet ist.

2. Bauteil nach Anspruch 1,
**dadurch gekennzeichnet,**
**dass** die Summe aus der Prägetiefe (p) der Prägestruktur (6) und der Wandstärke (a) des Grundkörpers (1) zumindest annähernd der Wandstärke (d) des Kanals (2) entspricht.

3. Bauteil nach dem Oberbegriff des Anspruchs 1,
**dadurch gekennzeichnet,**
**dass** die Fügestelle (5) unmittelbar am Grundkörper (1) angeordnet ist und der Kanal (2) mittels Kunststoffspritzguss festigkeitsübertragend mit dem Grundkörper (1) verbunden ist, wobei die Fügestelle (5) an einem vom Kanal (2) wegweisenden Ausbiegungsteil (14) des Grundkörpers (1) gebildet ist.

4. Bauteil nach einem der Ansprüche 1 bis 3,
**dadurch gekennzeichnet,**
**dass** der Kanal (2) auf dessen dem Grundkörper (1) zugewandter Außenseite eine den Zwischenbereich (12) bildende Oberflächenstruktur aufweist.

5. Bauteil nach einem der Ansprüche 1 bis 4,
**dadurch gekennzeichnet,**
**dass** das Anschlussteil (4) an der Fügestelle (5) mittels eines wärmearmen Fügeverfahrens mit dem Grundkörper (1) verbunden ist.

## Claims

1. A component, in particular crossmember, for arranging between A-pillars of a motor vehicle, with a metallic basic body (1) which has essentially a tubular form or another elongated form and to which a duct (2), in particular ventilation duct, of plastics (7) is connected at least partially within the profile of the basic body (1), and with a joining part (4) which is connected mechanically to the basic body (1) or to a part connected rigidly thereto and is used for fastening a further component, wherein the joining part (4) is connected at a joining point (5) with a cohesive material joint to the basic body (1) or to a part connected rigidly thereto with an intermediate region (12) being formed in order to reduce the heat transfer between the joining part (4) and the plastics (7) of the duct (2) and/or to conduct away a gas produced during the joining,
**characterized in that**
the joining point (5) is arranged directly on the basic body (1) and that the duct (2) is connected to the basic body with a cohesive material joint, wherein the basic body (1) has an embossed structure (6) in the region provided for the fastening of the joining part (4), which is designed in such a manner that the wall of the duct (2), which is otherwise formed from plastics (7), is formed in the intermediate region (12) adjoining the joining point (5) from the material of the basic body (1).

2. The component as claimed in claim 1,
**characterized in that** the sum of the embossed depth (p) of the embossed structure (6) and of the wall thickness (a) of the basic body (1) corresponds at least approximately to the wall thickness (d) of the duct (2).

3. The component as claimed in the preamble of claim 1,
**characterized in that**
the joining point (5) is arranged directly on the basic body (1) and that the duct (2) is connected to the basic body with a cohesive material joint, wherein the joining point (5) is formed on a bentoutward part (14) of the basic body (1), which bentoutward part points away from the duct (2).

4. The component as claimed in one of claims 1 to 3,
**characterized in that**,
on its outer side facing the basic body (1) the duct (2) has a surface structure forming the intermediate region (12).

5. The component as claimed in one of claims 1 to 4,
**characterized in that**
the joining part (4) is connected to the basic body (1) at the joining point (5) by means of a lowheat joining method.

## Revendications

1. Pièce de structure, en particulier traverse servant au montage entre deux montants A d'un véhicule à moteur, comprenant un corps de base métallique (1) présentant essentiellement une forme tubulaire ou une forme étirée sinon dans le sens de la longueur, corps de base auquel est raccordé, au moins partiellement à l'intérieur du profilé du corps de base (1), un conduit (2), en particulier un conduit d'air, en matière plastique (7), et comprenant une pièce de raccordement (4) reliée mécaniquement au corps de base (1) ou à une pièce reliée fixement à ce corps de base, ladite pièce de raccordement servant à la fixation d'une autre pièce de structure, où la pièce de raccordement (4) est raccordée au corps de base (1) au niveau d'un joint (5), par liaison de matière, en formant une zone intermédiaire (12) servant à diminuer la transmission de chaleur entre la pièce de raccordement (4) et la matière plastique (7) du conduit (2) et / ou servant à évacuer un gaz se produisant lors de la jonction,
**caractérisée en ce que** le joint (5) est disposé directement sur le corps de base (1), et le conduit (2) est raccordé au corps de base (1), la résistance transmise étant obtenue au moyen d'un moulage par injection de la matière plastique, où le corps de base (1), dans la zone prévue pour la fixation de la pièce de raccordement (4), présente une structure de bossage (6) qui est configurée de manière telle, que la paroi du conduit (2) formé au demeurant en matière plastique (7) soit formée, dans la zone intermédiaire (12) se raccordant au joint (5), dans le matériau du corps de base (1).

2. Pièce de structure selon la revendication 1, **caractérisée en ce que** la somme résultant de la profondeur de bossage (p) de à structure de bossage (6) et de l'épaisseur de paroi (a) du corps de base (1) correspond au moins presque à l'épaisseur de paroi (d) du conduit (2).

3. Pièce de structure selon le préambule de la revendication 1, **caractérisée en ce que** le joint (5) est disposé directement sur le corps de base (1), et le conduit (2) est raccordé au corps de base (1), la résistance transmise étant obtenue au moyen d'un moulage par injection de la matière plastique, où le joint (5) est formé sur une pièce (14) du corps de base (1), pliée vers l'extérieur et placée à l'opposé du conduit (2).

4. Pièce de structure selon l'une quelconque des revendications 1 à 3, **caractérisée en ce que** le conduit (2), sur son côté extérieur tourné vers le corps de base (1), présente une structure de surface formant la zone intermédiaire (12).

5. Pièce de structure selon l'une quelconque des revendications 1 à 4, **caractérisée en ce que** la pièce de raccordement (4), au niveau du joint (5), est raccordée au corps de base (1) au moyen d'un procédé d'assemblage dégageant peu de chaleur.
